# EUROPÄISCHE PATENTSCHRIFT

(11) **EP 3 475 040 B1**
(45) Veröffentlichungstag und Bekanntmachung des Hinweises auf die Patenterteilung: **30.08.2023**
(21) Anmeldenummer: 17772411.9
(22) Anmeldetag: 25.09.2017
(51) Int. Cl.: B27M 1/08, B27G 21/00, B23Q 11/08

(54) **BEARBEITUNGSMASCHINE MIT BEARBEITUNGSRÄUMEN SOWIE VERFAHREN**
MACHINE WITH PROCESSING AREA AND ASSOCIATED METHOD
MACHINE AVEC DES ZONES DE TRAVAIL ET MÉTHODE ASSOCIÉE

(30) Priorität: 26.09.2016 DE 102016218434
(43) Veröffentlichungstag der Anmeldung: 01.05.2019
(73) Patentinhaber: HOMAG GmbH, 72296 Schopfloch (DE)
(72) Erfinder: SCHWEIZER, Sven, 72348 Rosenfeld (DE); KANITZ, Carsten, 72108 Rottenburg (DE); FRIESE, Stefan, 72285 Pfalzgrafenweiler (DE); STURM, Christian, 72202 Nagold (DE); SCHMIEDER, Volker, 72116 Mössingen (DE)
(74) Vertreter: Hoffmann Eitle
(86) Internationale Anmeldenummer: PCT/EP2017/074192
(87) Internationale Veröffentlichungsnummer: WO 2018/055151

(56) Entgegenhaltungen:
- EP-A1- 2 063 165
- WO-A1-2008/048969
- DE-A1-102006 050 425
- FR-A1- 2 312 338
- GB-A- 324 945

## Beschreibung

### Technisches Gebiet

Die vorliegende Erfindung betrifft eine Bearbeitungsmaschine gemäß der Präambel des Anspruchs 1 sowie ein Verfahren gemäß der Präambel des Anspruchs 11. Eine solche Bearbeitungsmaschine und ein solches Verfahren sind aus dem Dokument EP 2 063 165 A1 bekannt.

### Stand der Technik

Bei Holzbearbeitungsmaschinen als einem Beispiel für Maschinen aus dem Gebiet der Möbel- oder Bauelementefertigung sind Baureihen bekannt, bei denen zwei Bearbeitungstische in einem relativ begrenzten Bauraum angeordnet sind, wobei Werkstücke in einem unabhängigen Betrieb bearbeitet werden können. Hierbei kann es je nach Art der Werkstücke zu verschiedenen Aufspannsituationen kommen.

Allerdings kann hierbei eine Bearbeitung derart erfolgen, dass durch die Zerspanung an einem Bearbeitungstisch ein vergleichsweise starker Späne- oder Staubstrahl auf ein Werkstück am anderen Bearbeitungstisch oder auf mechanische Komponenten des anderen Bearbeitungstisches trifft. Dabei besteht die Gefahr, dass ein Werkstück beschädigt und/oder die Funktion des jeweils anderen Bearbeitungstisches beeinträchtigt wird.

Werden bspw. Werkstücke durch die beschriebenen Umstände durch Späne verunreinigt oder gar beschädigt, hat dies negative Auswirkungen, da die Oberflächen der Werkstücke ggf. bereits abschließend bearbeitet wurden und durch die Verunreinigung oder Beschädigung ein nachfolgender Lackiervorgang nicht ohne Weiteres durchgeführt werden kann. Vielmehr sind weitere Nachbearbeitungsschritte erforderlich, da andernfalls Fehlstellen an der lackierten Oberfläche sichtbar werden würden.

Darüber hinaus müssen bauliche Maßnahmen umgesetzt werden, um die Mechanik der Bearbeitungstische vor dem Späneflug zu schützen. Dies führt zu teilweise komplexem Konstruktionsaufwand und entsprechenden Kosten.

Beispielsweise ist ein Bearbeitungszentrum gemäß der EP 1 882 570 A1 bekannt, welches auf die Bearbeitung langgestreckter Werkstücke, wie Fenster, Türen, usw. gerichtet ist. Das Bearbeitungszentrum weist dabei Tischeinheiten sowie eine Traverse mit Spindeleinheiten auf, die derart angeordnet sind, dass Werkstücke der Tischeinheit gleichzeitig bearbeitet werden können und die Übergabe von einer ersten Tischeinheit zu einer zweiten Tischeinheit erleichtert wird. Hierzu sind die erste und die zweite Tischeinheit langgestreckt und in ihrer Längsstreckung parallel zur Längsstreckung einer langgestreckten Traverse ausgerichtet, wobei mindestens eine der Tischeinheiten senkrecht in Bezug auf die Traverse verfahrbar ist. Auf diese Weise ist eine gleichzeitige Bearbeitung von Werkstücken an zwei Tischeinheiten möglich, wodurch die Bearbeitungskapazität bei relativ geringem Bauraum erhöht wird.

Als weiteres Dokument ist die DE 10 2014 222 422 A1 bekannt.

Zur Vermeidung des Späneflugs können im Stand der Technik verschiedene Einrichtungen in eine Bearbeitungsmaschine integriert werden. Beispielsweise sind Absaughauben bekannt, die aktiv Späne absaugen. Beispielsweise ist zwischen Führungsbahnen von Bearbeitungseinheiten ein entsprechender Bauraum für die Absaughauben vorzusehen, um deren Betrieb sicherzustellen. Es ist ersichtlich, dass derartige Lösungen einem Ansatz nach einer kompakten Bauweise entgegenstehen.

Ferner sind im Stand der Technik Späneleitelemente bekannt, die an der Bearbeitungsspindel angeordnet sind, um den Späneflug abzulenken und bspw. in die Absaughaube einzuleiten. Dabei kann das Späneleitelement zusammen mit der Spindel verfahren werden. Allerdings hat diese Lösung den Nachteil, dass auf Grund unterschiedlicher Werkzeugdurchmesser Einschränkungen in Kauf genommen werden müssen. Beispielsweise kann ein Späneleitelement bei einem Werkzeug mit einem sehr kleinen oder sehr großen Durchmesser nicht zum Einsatz kommen. Bei einem Werkzeug mit einem relativ kleinen Durchmesser besteht die Gefahr einer Kollision mit dem Werkstück. Bei einem Werkzeug mit einem relativ großen Werkzeugdurchmesser würde ein entsprechendes Späneleitelement relativ viel Bauraum fordern, wodurch wiederum die Beweglichkeit der Bearbeitungsspindel eingeschränkt ist. Darüber hinaus kann ein an einer Bearbeitungsspindel montiertes Späneleitelement bei bestimmten Bearbeitungsaggregaten, wie einem 5-Achs-Kopf, nicht eingesetzt werden.

Darüber hinaus ist es bekannt, feste Trennelemente in einer Bearbeitungsmaschine vorzusehen. Auf diese Weise ist es zwar möglich, mittels zweier Bearbeitungsaggregate in einer Maschine parallele Bearbeitungen durchzuführen. Allerdings erfordert diese Bauweise einen relativ hohen Platzbedarf und limitiert durch die gewählte Bauweise die Art der zu bearbeitenden Werkstücke auf die entsprechende Größe.

### Gegenstand der Erfindung

Ziel der vorliegenden Erfindung ist es, eine Bearbeitungsmaschine sowie ein Verfahren bereitzustellen, mit denen bei kompakter Bauweise eine hohe Maschinenleistung umgesetzt werden können.

Der Gegenstand des Anspruchs 1 stellt eine entsprechende Bearbeitungsmaschine bereit. Ferner wird ein erfindungsgemäßes Verfahren gemäß Anspruch 10 vorgesehen. Weitere bevorzugte Ausführungsformen sind in den abhängigen Ansprüchen aufgeführt, wobei Merkmale der abhängigen Vorrichtungsansprüche im Rahmen des Verfahrens zum Einsatz kommen können, während Merkmale der abhängigen Verfahrensansprüche eine Eignung der Vorrichtung gemäß Anspruch 1 bedingen können.

Anspruch 1 stellt eine Bearbeitungsmaschine mit den folgenden Merkmalen bereit: eine erste Werkstückhalteeinrichtung zum Halten eines ersten Werkstücks und eine zweite Werkstückhalteeinrichtung zum Halten eines zweiten Werkstücks, und ein Trennelement. Durch das Trennelement kann ein erster Bearbeitungsbereich von einem zweiten Bearbeitungsbereich abgetrennt werden kann, wobei in jedem Bearbeitungsbereich eine der Werkstückhalteeinrichtungen angeordnet ist oder angeordnet werden kann (dorthin bewegt werden kann). Insbesondere können eine der Werkstückhalteeinrichtungen oder die Werkstückhalteeinrichtungen in jeweils einen der Bearbeitungsbereiche bewegt werden. Somit ist das Trennelement zwischen der ersten Werkstückhalteeinrichtung und der zweiten Werkstückhalteeinrichtung platzierbar. Ferner ist es vorgesehen, dass das Trennelement bewegbar ist, um die Dimensionen des ersten und zweiten Bearbeitungsbereichs zu ändern.

Durch das Trennelement kann ein erster Bearbeitungsbereich somit derart von einem zweiten Bearbeitungsbereich getrennt werden, dass bei einer Bearbeitung in einem der Bearbeitungsbereiche keine Späne in den jeweils anderen Bearbeitungsbereich gelangen.

Das Trennelement kann, wie nachfolgend beschrieben, mittels eines eigenen Antriebs unabhängig bewegt werden.

Die erste Werkstückhalteeinrichtung und/oder die zweite Werkstückhalteeinrichtung können einen Werkzeugspanner oder eine Vielzahl von nebeneinander (insbesondere in einer Reihe) angeordneten Werkzeugspannern umfassen. Der oder die Werkzeugspanner können Klemmgreifer, Vakuumspanner, oder ähnliches sein.

Bevorzugt sind die Werkstückhalteeinrichtungen als Klemmgreifer ausgeführt, die nach zwei Seiten ausgerichtet sind. Somit kann ein Werkstück umgespannt und somit an zwei Längsseiten bearbeitet werden.

Dabei ist es insbesondere vorgesehen, dass das Trennelement die Dimensionen des ersten und zweiten Bearbeitungsbereichs so zu ändern, dass bei einer Vergrößerung der Dimensionen des ersten Bearbeitungsbereichs der zweite Bearbeitungsbereich verkleinert wird, und umgekehrt.

Die erfindungsgemäße Bearbeitungsmaschine hat den Vorteil, dass variable Bearbeitungsbereiche bereitgestellt werden können. Somit kann eine hohe Maschinenleistung bei gleichzeitig geringem Bauraum realisiert werden. Durch das Trennelement können die Bearbeitungsbereiche voneinander getrennt werden. Somit kann rein beispielhaft verhindert werden, dass Späne oder ähnliches von einem Bearbeitungsbereich in den jeweils anderen Bearbeitungsbereich gelangen. Da das Trennelement bewegbar ist, kann dieses vor dem Hintergrund von Werkzeugen mit unterschiedlichsten Durchmessern optimal positioniert werden. Einschränkungen aufgrund sehr kleiner oder großer Werkzeugdurchmesser sind nicht vorhanden.

Ein Gedanke der vorliegenden Erfindung ist es, zwischen den Bearbeitungsaggregaten (beispielsweise Bearbeitungsspindeln), Bearbeitungstischen oder Werkstücken ein Trennelement einzusetzen, mit dem die Größe und/oder die Anordnung von Bearbeitungsbereichen variabel verändert werden kann. Dieses Trennelement (Arbeitsraumabtrenneinrichtung) kann unabhängig vom Bearbeitungsaggregat oder dem Werkstück verfahren werden und verfügt bevorzugt über einen eigenen Antrieb.

Gemäß einer später detaillierter beschriebenen Ausführungsform ist das Trennelement darüber hinaus so gestaltet, dass Späne oder Staub in eine bestimmte Richtung gelenkt werden können (bspw. zumindest teilweise in vertikaler Richtung nach unten und/oder in vertikaler Richtung nach oben, und/oder seitlich). Dort können die Späne und Staub dann durch einen Trichter oder eine Wanne aufgefangen werden, der/die bevorzugt mit einem Absaugschlauch in Verbindung steht.

Die Werkstückhalteeinrichtungen können als Klemmeinrichtungen, Saugspanner, Bearbeitungstische oder ähnliches ausgebildet sind.

Gemäß einer bevorzugten Ausführungsform ist es vorgesehen, dass das Trennelement an einer verfahrbaren Einheit angebracht oder integral mit dieser ausgebildet ist, welche verfahrbare Einheit einen Antrieb, insbesondere einen Servomotor, zum Bewegen der verfahrbaren Einheit aufweist. Da die verfahrbare Einheit über einen eigenen Antrieb verfügt, kann diese unabhängig von einem weiteren Antrieb der Bearbeitungsmaschine, wie beispielsweise einem Antrieb zum Bewegen eines Bearbeitungsaggregats, verstellt werden. Somit ist diese Ausführungsform besonders flexibel einsetzbar.

Es ist bevorzugt, dass das Trennelement relativ zur verfahrbaren Einheit bewegbar, insbesondere schwenkbar, ist. Auf diese Weise kann das Trennelement in eine Position verstellt werden, in der die Bearbeitungsbereiche miteinander verbunden sind. Auch ist es möglich, die Art der Trennung zwischen den Bearbeitungsbereichen einzustellen. Beispielsweise genügt in bestimmten Fällen eine Trennung, die dafür sorgt, dass bei der Bearbeitung eines bestimmten Werkstücks keine Späne in den jeweils anderen Bearbeitungsbereich eindringen. Wird nachfolgend ein größeres oder kleineres Werkstück bearbeitet, kann es zielführend sein, das Maß der Abschirmung zwischen dem ersten und zweiten Bearbeitungsbereich zu ändern.

In einer Ausführungsform ist es vorgesehen, dass das Trennelement entlang einer linearen Führung bewegbar ist. Die Führung ist insbesondere in horizontaler Richtung ausgerichtet. Somit wird eine exakte Verstellung gewährleistet. Beispielsweise kann es sich bei der Führung um eine Führungsschiene handeln, in die die bewegbare Einheit eingreift und/oder entlang derer das Trennelement bewegbar ist.

Ferner ist es bevorzugt, dass das Trennelement plattenförmig ausgebildet ist und bevorzugt eine Kontur, insbesondere Rillen, geneigte Flächen und/oder gekrümmte Flächen, zum Ableiten von Spänen aufweist, insbesondere in einer zumindest teilweise vertikal nach unten ausgerichteten Richtung. Die plattenförmige Ausgestaltung des Trennelements stellt eine besonders kompakte Bauweise sicher. Wenn das Trennelement darüber hinaus mit einer Kontur zum Ableiten von Spänen ausgestattet ist, können diese in besonders vorteilhafter Weise zu einer Absaugeinrichtung geleitet werden, ohne dass das Trennelement selbst eine Absaugeinrichtung aufweist. Die "Kontur" umfasst gemäß einer besonders bevorzugten Variante Rillen, kann jedoch auch geneigte oder gekrümmte Flächen umfassen.

Gemäß der Erfindung ist in vertikaler Richtung unterhalb der ersten und/oder zweiten Werkstückhalteeinrichtung, eine erste Absaugeinrichtung vorgesehen, wobei bevorzugt ist, dass die erste Absaugeinrichtung einen Trichter zur Aufnahme von Spänen umfasst. Somit können Späne der Gravitationskraft folgend zur ersten Absaugeinrichtung gelangen. Dabei ist es gemäß einer besonders vorteilhaften Kombination vorgesehen, dass das Trennelement die Späne in Richtung der ersten Absaugeinrichtung leitet.

Die Bearbeitungsmaschine kann ferner zumindest eine seitliche Absaugeinrichtung aufweisen. Diese kann Späne in einem Randbereich eines der Bearbeitungsbereiche absaugen. Bevorzugt umfasst jeder der Bearbeitungsbereiche eine seitliche Absaugeinrichtung.

Bevorzugt ist eine Steuereinrichtung vorgesehen, die eingerichtet ist, das Trennelement vor, während oder nach einem Spannen eines Werkstücks mit der ersten Werkstückhalteeinrichtung und/oder der zweiten Werkstückhalteeinrichtung zu bewegen. Somit ist die Möglichkeit der Trennung der Bearbeitungsbereiche besonders flexibel.

Bevorzugt umfasst die erfindungsgemäße Bearbeitungsmaschine ein erstes Bearbeitungsaggregat und ein zweites Bearbeitungsaggregat, die zum, insbesondere spanenden, Bearbeiten eines Werkstücks eingerichtet sind, wobei bevorzugt ist, dass das erste Bearbeitungsaggregat im ersten Bearbeitungsbereich und das zweite Bearbeitungsaggregat im zweiten Bearbeitungsbereich angeordnet werden kann. Somit ist eine zeitlich zumindest teilweise parallele Bearbeitung zweier Werkstücke möglich.

Gemäß einer weiteren Ausführungsform wird die erste Werkstückhalteeinrichtung durch einen ersten verfahrbaren Träger getragen, der entlang einer ersten Führungseinrichtung, insbesondere Schiene, bewegbar ist, und/oder die zweite Werkstückhalteeinrichtung wird durch einen zweiten verfahrbaren Träger getragen, der entlang einer zweiten Führungseinrichtung, insbesondere Schiene, bewegbar ist.

Es ist bevorzugt, das dass sich die erste und/oder zweite Führungseinrichtung quer, insbesondere senkrecht, zur Führung des Trennelements erstreckt. Ferner ist es bevorzugt, dass sich die erste und/oder zweite Führung in der gleichen oder im Wesentlichen Richtung wie das Trennelement erstreckt. Auf diese Weise können Werkstücke in bevorzugter Weise bewegt und zum Ort der Bearbeitung gefördert werden.

Darüber hinaus können auch mehrere Trennelemente vorgesehen sein, um drei oder mehr Bearbeitungsbereiche abzutrennen. Ferner können drei oder mehr Werkstückhalteeinrichtungen vorgesehen sein, die bevorzugt jeweils parallel zueinander angeordnet sind. Die mehreren Trennelemente können gemäß einer bevorzugten Variante unabhängig voneinander bewegt werden, um auf diese Weise die mehreren Bearbeitungsbereiche gezielt zu verändern.

Ferner kann die vorliegende Erfindung eine Verwendung der zuvor beschriebenen Vorrichtung betreffen.

Darüber hinaus betrifft die Erfindung ein Verfahren. Im Zuge des Verfahrens kann bevorzugt eine Bearbeitungsmaschine gemäß einer der zuvor beschriebenen Aspekte zum Einsatz kommen. Das Verfahren umfasst dabei die Schritte:
- Halten oder Spannen zumindest eines Werkstücks mit einer ersten Werkstückhalteeinrichtung oder einer zweiten Werkstückhalteeinrichtung,
   wobei durch ein Trennelement ein erster Bearbeitungsbereich zumindest teilweise von einem zweiten Bearbeitungsbereich getrennt wird und das zumindest ein Werkstück im ersten oder zweiten Bearbeitungsbereich angeordnet ist oder wird,
- Bewegen des Trennelements vor, während oder nach dem Halten/Spannen des zumindest einen Werkstücks, um die Dimensionen des ersten und zweiten Bearbeitungsbereichs zu ändern,
- Bearbeiten des zumindest einen Werkstücks.

Die bereits im Rahmen der Bearbeitungsmaschine beschriebenen Vorteile kommen auch beim Verfahren zum Tragen. Ferner ist es bevorzugt, dass die genannten Verfahrensschritte in der genannten Reihenfolge durchgeführt werden.

Es ist bevorzugt, dass mit der ersten Werkstückhalteeinrichtung ein erstes Werkstück und mit der zweiten Werkstückhalteeinrichtung ein zweites Werkstück gehalten wird.

Ferner ist es bevorzugt, dass das erste Werkstück nach dem Bearbeiten von der ersten Werkstückhalteeinrichtung zur zweiten Werkstückhalteeinrichtung übergeben wird, oder das zweite Werkstück nach dem Bearbeiten von der zweiten Werkstückhalteeinrichtung zur ersten Werkstückhalteeinrichtung übergeben wird. Somit kann das Werkstück an mehreren Seiten bearbeitet werden.

Die erste und/oder zweite Werkstückhalteeinrichtung ist bevorzugt so ausgeführt, dass an entgegengesetzten zwei Seiten ein Werkstück eingespannt werden kann. Das Werkstück kann in diesem Fall nach einer Bearbeitung einer Längsseite auf die andere Seite der Werkstückhalteeinrichtung umgespannt werden. Somit kann das Werkstück an beiden Längsseiten bearbeitet werden.

Es ist bevorzugt, dass das Trennelement entlang einer, insbesondere in horizontaler Richtung ausgerichteten, linearen Führung bewegt wird. Somit lässt sich das Trennelement sicher führen und exakt positionieren.

Ferner ist es bevorzugt, dass das Trennelement zum Trennen des ersten Bearbeitungsbereichs vom zweiten Bearbeitungsbereich zwischen diese hinein bewegt, insbesondere geschwenkt, wird. Mit anderen Worten wird das Trennelement von einer Ruheposition in eine Arbeitsposition bewegt. In der Arbeitsposition wird zumindest teilweise eine Trennung zwischen den Bearbeitungsbereichen erreicht.

### Kurze Beschreibung der Zeichnungen

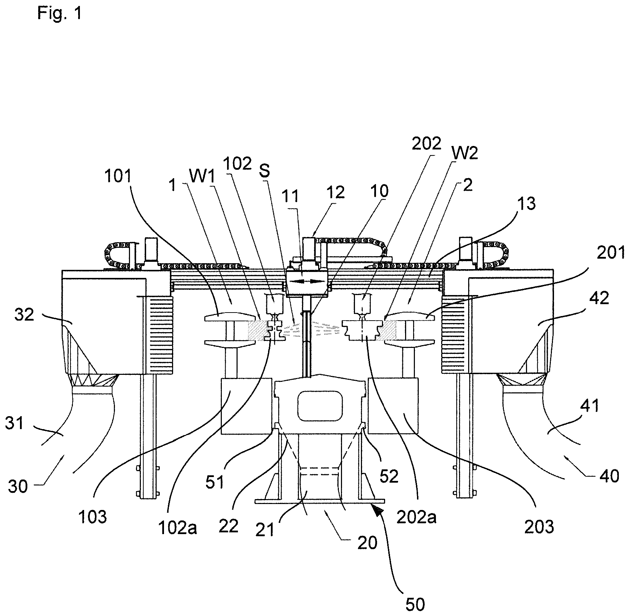

- Fig. 1: zeigt eine Seitenansicht einer bevorzugten Ausführungsform der vorliegenden Erfindung

### Detaillierte Beschreibung der bevorzugten Ausführungsformen

Nachfolgend wird anhand der beigefügten Figur 1 eine bevorzugte Ausführungsform der vorliegenden Erfindung beschrieben. Weitere in diesem Zusammenhang genannte Modifikationen bestimmter Merkmale/Komponenten können jeweils einzeln miteinander kombiniert werden, um weitere Ausführungsformen der Erfindung auszubilden.

Bei der nachfolgend beschriebenen Ausführungsform handelt es sich um eine Bearbeitungsmaschine, die im Bereich der Bearbeitung von Werkstücken aus Holz, Holzwerkstoffen oder Ähnlichem zum Einsatz kommt. Rein beispielhaft kann es sich bei den Werkstücken um Elemente für Fenster, Türen, Möbel oder dergleichen handeln.

Die Bearbeitungsmaschine umfasst einen ersten Bearbeitungsbereich 1 sowie einen zweiten Bearbeitungsbereich 2, die, wie nachfolgend im Detail beschrieben, variabel sind. Ferner ist eine Traverse 50 vorgesehen, die sich entlang der Bearbeitungsmaschine erstreckt.

Im ersten Bearbeitungsbereich 1 ist eine Werkstückhalteeinrichtung 101 angeordnet, mit der in der in Fig. 1 gezeigten Situation ein Werkstück W1 gehalten oder geklemmt werden kann. Die erste Werkstückhalteeinrichtung 101 wird durch einen ersten verfahrbaren Träger 103 getragen, der entlang einer Führungseinrichtung 51, insbesondere Schiene, der Traverse 50 bewegbar ist. Die Bewegung des verfahrbaren Trägers 103, und somit der ersten Werkstückhalteeinrichtung 101, erfolgt hier senkrecht zur Darstellungsebene in Fig. 1.

In der vorliegenden Ausführungsform wird die erste Werkstückhalteeinrichtung durch eine Vielzahl von Klemmgreifern ausgebildet, die entlang des verfahrbaren Trägers angeordnet sind.

Ferner ist im ersten Bearbeitungsbereich eine erste Bearbeitungsspindel 102 (Bearbeitungsaggregat) mit einem ersten Bearbeitungswerkzeug 102a angeordnet. Vorliegend handelt es sich beim ersten Bearbeitungswerkzeug 102a um ein spanend arbeitendes Bearbeitungswerkzeug, wie einen Fräser oder einen Bohrer.

Im zweiten Bearbeitungsbereich 2 befindet sich eine zweite Werkstückhalteeinrichtung 201, mit der in der in Fig. 1 gezeigten Situation ein zweites Werkstück W2 gehalten oder geklemmt werden kann. Die zweite Werkstückhalteeinrichtung 201 wird durch einen zweiten verfahrbaren Träger 203 getragen, der entlang einer ersten Führungseinrichtung 52, insbesondere Schiene, einer Traverse 50 bewegbar ist. Die Bewegung des verfahrbaren Trägers 203, und somit der zweiten Werkstückhalteeinrichtung 201, erfolgt in diesem Ausführungsbeispiel senkrecht zur Darstellungsebene in Fig. 1.

In der vorliegenden Ausführungsform wird die zweite Werkstückhalteeinrichtung durch eine Vielzahl von Klemmgreifern ausgebildet, die entlang der verfahrbaren Einheit angeordnet sind.

Ferner befindet sich im zweiten Bearbeitungsbereich 2 eine zweite Bearbeitungsspindel 202 (Bearbeitungsaggregat) mit einem zweiten Bearbeitungswerkzeug 202a. Vorliegend ist auch das zweite Bearbeitungswerkzeug 202a ein spanend arbeitendes Bearbeitungswerkzeug, wie ein Fräser, ein Bohrer, oder ähnliches.

Gemäß einer Modifikation der in Fig. 1 dargestellten Ausführungsform kann zumindest eines der Bearbeitungswerkzeuge auch ein nicht-spanendes Werkzeug sein. Rein beispielhaft kann es sich um ein Werkzeug zum Glätten der Oberfläche, ein Werkzeug zum Aufbringen eines Beschichtungsmaterials, oder dergleichen handeln.

Obwohl die Werkstückhalteeinrichtungen 101, 102 in der in Fig. 1 dargestellten Ausführungsform als mechanische Spanneinrichtungen ausgebildet sind, ist ersichtlich, dass die Werkstückhalteeinrichtungen auch als Vakuumspanner oder als Werkstücktisch ausgebildet sein können.

Zur Veränderung der Dimensionen der Bearbeitungsbereiche 1, 2 ist ein Trennelement 10 (Trennwand) vorgesehen, welches an einer verfahrbaren Einheit 11 angebracht ist. Die verfahrbare Einheit 11 umfasst eine Antriebseinheit 12 und ist entlang einer in horizontaler Richtung ausgerichteten Führung 13 bewegbar angeordnet. Bei der Führung 13 handelt es sich bei der hier beschriebenen Ausführungsform um eine Führungsschiene. Nachdem die verfahrbare Einheit 11 mit dem Trennelement 10 entlang der Führung 13 bewegt werden kann, können die Bearbeitungsbereiche 1, 2 vergrößert oder verkleinert werden.

Darüber hinaus ist das Trennelement 10 relativ zur verfahrbaren Einheit 11 schwenkbar angeordnet, sodass die Bearbeitungsbereiche 1, 2 zu einem gemeinsamen Bearbeitungsbereich zusammengefasst werden können, wenn das Trennelement 10 (beispielsweise manuell oder maschinell) herausgenommen oder herausgeschwenkt wird.

Das Trennelement 10 hat eine plattenförmige Gestalt, und umfasst gemäß einer Modifikation der hier beschriebenen Ausführungsform Späneleitkonturen (in der vorliegenden Seitenansicht nicht dargestellt) an seiner Oberfläche, um Späne S derart abzulenken, dass diese in den Bereich einer ersten Absaugeinrichtung 20 gelangen.

Die erste Absaugeinrichtung 20 ist, in vertikaler Richtung betrachtet, unterhalb der Bearbeitungsbereiche 1, 2 angeordnet, und umfasst einen ersten Schlauch 21 sowie einen Trichter 22. Der Trichter 22 ist in Richtung der Bearbeitungsbereiche 1, 2 geöffnet, um herunterfallende Späne S aufzunehmen. Die derart aufgenommenen Späne S können dann mit dem Schlauch 21 in einen (nicht dargestellten) Aufnahmebehälter gefördert werden.

In der hier dargestellten Ausführungsform verfügt die Bearbeitungsmaschine neben der beschriebenen ersten Absaugeinrichtung 20 über eine zweite Absaugeinrichtung 30, die eine seitliche Absaugung sicherstellt. Die zweite Absaugeinrichtung 30 umfasst hierzu einen zweiten Schlauch 31 sowie eine zweite Saugeinrichtung 32.

Im zweiten Bearbeitungsbereich 2 ist eine dritte Absaugeinrichtung 40 vorgesehen, welche einen dritten Schlauch 41 sowie eine dritte Saugeinrichtung 42 umfasst. Die zweite Saugeinrichtung 32 ist bei der hier beschriebenen Ausführungsform im Wesentlichen gegenüberliegend der dritten Saugeinrichtung 42 angeordnet.

Nachfolgend wird ein beispielhafter Betrieb der Bearbeitungsmaschine gemäß der Ausführungsform der Erfindung beschrieben.

Durch die Werkstückhalteeinrichtung 101 wird ein erstes Werkstück W1 geklemmt. Gleichzeitig oder nachfolgend wird durch die zweite Werkstückhalteeinrichtung 201 ein zweites Werkstück W2 geklemmt. In der der hier dargestellten Ausführungsform sind die Werkstücke im Wesentlichen parallel zueinander angeordnet, wobei gemäß weiterer Varianten auch eine andere Anordnung denkbar ist.

Die verfahrbare Einheit 11 wird vor, während oder nach dem Spannen der Werkstücke W1, W2 entlang der Führung 13 verfahren, um das Trennelement 10 entsprechend den Dimensionen der Werkstücke W1, W2 oder der Bearbeitungsspindeln 102, 202 zu positionieren. Im vorliegenden Ausführungsbeispiel weist beispielsweise das zweite Bearbeitungswerkzeug 202a einen größeren Durchmesser auf als das erste Bearbeitungswerkzeug 102a. Somit wird die verfahrbare Einheit 11 mit dem Trennelement 10 derart bewegt, dass der zweite Bearbeitungsbereich 2 größer ist als der erste Bearbeitungsbereich 1. Somit wird die Beweglichkeit der zweiten Bearbeitungsspindel 202 sichergestellt.

Nachfolgend können die Werkstücke W1, W2 bearbeitet werden. Hierbei werden die Späne S, die sowohl bei der Bearbeitung des ersten als auch des zweiten Werkstücks W1, W2 entstehen, durch das Trennelement 10 abgelenkt und in Richtung des Trichters 22 der ersten Absaugeinrichtung 20 geleitet werden. Somit gelangen die Späne S in den Trichter 22 der ersten Absaugeinrichtung 20 und werden durch den ersten Schlauch 21 abgesaugt.

Nachdem die Werkstücke W1, W2 bearbeitet wurden, wird das Trennelement 10 beispielsweise aus dem Raum der Bearbeitungsbereiche 1, 2 herausgeschwenkt und das Werkstück W2 aus der Bearbeitungsmaschine entnommen. Nachfolgend kann das Werkstück W1 von der ersten Werkstückhalteeinrichtung 101 zur zweiten Werkstückhalteeinrichtung 201 übergeben werden und die erste Werkstückhalteeinrichtung 101 mit einem neuen Werkstück beschickt werden.

Alternativ ist es möglich, das Werkstück nach einer Bearbeitung einer Längsseite auf die andere Seite der Werkstückhalteeinrichtung umzuspannen. Somit kann das Werkstück an beiden Längsseiten bearbeitet werden. Dies wird im vorliegenden Ausführungsbeispiel ermöglicht, nachdem die Werkstückhalteeinrichtungen Klemmgreifer aufweisen, die nach zwei Seiten ausgerichtet sind und somit von zwei entgegengesetzten Seiten ein Werkstück aufnehmen können.

In einem weiteren Verfahrensschritt wird das Trennelement 10 wieder in den Bereich der Bearbeitungsbereiche 1, 2 geschwenkt und die verfahrbare Einheit 11 ggf. entlang der Führung 13 verfahren, um die Größe der Bearbeitungsbereiche 1, 2 entsprechend der nun vorliegenden Situation zu ändern.

Alternativ hierzu ist es möglich, eines der Werkstücke W1, W2 oder beide Werkstücke W1, W2 aus der Bearbeitungsmaschine zu entnehmen, und dabei das Trennelement 10 in seiner Position zu halten. Nachdem die erste und/oder zweite Werkstückhaltevorrichtung 101, 201 wieder mit einem Werkstück beschickt wurde, kann die Position des Trennelements 10 angepasst werden.

Die Bewegung des Trennelements 10 erfolgt unabhängig von einer Bewegung der ersten und/oder zweiten Bearbeitungsspindel. Somit wird eine große Flexibilität gewährleistet.

Gemäß einer weiteren Modifikation können auch mehrere Trennelemente vorgesehen sein, um die zwei Bearbeitungsbereiche 1, 2 abzutrennen. Ob lediglich eines der Trennelemente oder mehrere Trennelemente betätigt werden, kann gemäß der konkreten Anforderung (bspw. Werkstückgröße) entschieden werden.

Darüber hinaus können auch mehrere Trennelemente vorgesehen sein, um drei oder mehr Bearbeitungsbereiche abzutrennen. Die mehreren Trennelement können gemäß einer bevorzugten Variante unabhängig voneinander bewegt werden, um auf diese Weise die mehreren Bearbeitungsbereiche gezielt zu verändern.

## Patentansprüche

1. Bearbeitungsmaschine zum Bearbeiten von Werkstücken (W1, W2), aufweisend:
eine erste Werkstückhalteeinrichtung (101) zum Halten eines ersten Werkstücks (W1) und eine zweite Werkstückhalteeinrichtung (201) zum Halten eines zweiten Werkstücks (W2),
ein Trennelement (10), wobei durch das Trennelement (10) ein erster Bearbeitungsbereich (1) zumindest teilweise von einem zweiten Bearbeitungsbereich (2) getrennt werden kann,
wobei in jedem Bearbeitungsbereich (1, 2) eine der Werkstückhalteeinrichtungen (101, 201) angeordnet ist oder angeordnet werden kann,
**dadurch gekennzeichnet, dass**
das Trennelement (10) bewegbar ist, um die Dimensionen des ersten und zweiten Bearbeitungsbereichs (1, 2) zu ändern,
wobei in vertikaler Richtung unterhalb der ersten und/oder zweiten Werkstückhalteeinrichtung (101, 201), eine erste Absaugeinrichtung (20) vorgesehen ist.

2. Bearbeitungsmaschine gemäß Anspruch 1, **dadurch gekennzeichnet, dass** das Trennelement (10) an einer verfahrbaren Einheit (11) angebracht oder integral mit dieser ausgebildet ist, welche verfahrbare Einheit (11) einen Antrieb (12), insbesondere einen Servomotor, zum Bewegen der verfahrbaren Einheit (11) aufweist, wobei bevorzugt ist,
dass das Trennelement (10) relativ zur verfahrbaren Einheit (11) bewegbar, insbesondere schwenkbar, ist.

3. Bearbeitungsmaschine gemäß einem der vorangegangenen Ansprüche, **dadurch gekennzeichnet, dass** das Trennelement (10) entlang einer, insbesondere in horizontaler Richtung ausgerichteten, linearen Führung (13) bewegbar ist.

4. Bearbeitungsmaschine gemäß einem der vorangegangenen Ansprüche, **dadurch gekennzeichnet, dass** das Trennelement (10) plattenförmig ausgebildet ist und bevorzugt eine Kontur, insbesondere Rillen, geneigte Flächen und/oder gekrümmte Flächen, zum Ableiten von Spänen aufweist, insbesondere in einer zumindest teilweise vertikal nach unten ausgerichteten Richtung.

5. Bearbeitungsmaschine gemäß einem der vorangegangenen Ansprüche, wobei die erste Absaugeinrichtung einen Trichter (22) zur Aufnahme von Spänen umfasst.

6. Bearbeitungsmaschine gemäß einem der vorangegangenen Ansprüche, **dadurch gekennzeichnet, dass** die Bearbeitungsmaschine zumindest eine seitliche Absaugeinrichtung aufweist (40, 30).

7. Bearbeitungsmaschine gemäß einem der vorangegangenen Ansprüche, **gekennzeichnet durch** eine Steuereinrichtung, die eingerichtet ist, das Trennelement (10) vor, während oder nach einem Spannen eines Werkstücks (W1, W2) mit der ersten Werkstückhalteeinrichtung (101) und/oder der zweiten Werkstückhalteeinrichtung (W2) zu bewegen.

8. Bearbeitungsmaschine gemäß einem der vorangegangenen Ansprüche, **gekennzeichnet durch** ein erstes Bearbeitungsaggregat (102) und ein zweites Bearbeitungsaggregat (202), die zum, insbesondere spanenden, Bearbeiten eingerichtet sind, wobei bevorzugt ist, dass das erste Bearbeitungsaggregat (102) im ersten Bearbeitungsbereich (1) und das zweite Bearbeitungsaggregat (202) im zweiten Bearbeitungsbereich (2) angeordnet werden kann.

9. Bearbeitungsmaschine gemäß einem der vorangegangenen Ansprüche, **dadurch gekennzeichnet, dass** die erste Werkstückhalteeinrichtung (101) durch einen ersten verfahrbaren Träger (103) getragen wird, der entlang einer ersten Führungseinrichtung (51), insbesondere Schiene, bewegbar ist, und/oder die zweite Werkstückhalteeinrichtung (201) durch einen zweiten verfahrbaren Träger (203) getragen wird, der entlang einer zweiten Führungsrichtung (52), insbesondere Schiene, bewegbar ist, wobei
bevorzugt ist, dass sich die erste und/oder zweite Führungseinrichtung quer, insbesondere senkrecht, zur Führung (13) des Trennelements (10) erstreckt.

10. Bearbeitungsmaschine gemäß einem der vorangegangenen Ansprüche, **dadurch gekennzeichnet, dass** die erste und/oder zweite Werkstückhalteeinrichtung (101, 201) so ausgeführt, dass ein Werkstück an zwei Seiten der Werkstückhalteeinrichtung eingespannt werden kann.

11. Verfahren zur Werkstückbearbeitung, bevorzugt unter Verwendung einer Vorrichtung gemäß einer der vorangegangenen Ansprüche, umfassend:
Halten zumindest eines Werkstücks (W1, W2) mit einer ersten Werkstückhalteeinrichtung (101) oder einer zweiten Werkstückhalteeinrichtung (201),
wobei durch ein Trennelement (10) ein erster Bearbeitungsbereich (1) zumindest teilweise von einem zweiten Bearbeitungsbereich (2) getrennt wird und das zumindest eine Werkstück (W1, W2) im ersten oder zweiten Bearbeitungsbereich (1, 2) angeordnet ist oder wird,
Bewegen des Trennelements (10) vor, während oder nach dem Halten des zumindest einen Werkstücks (W1, W2), um die Dimensionen des ersten und zweiten Bearbeitungsbereichs (1, 2) zu ändern,
Bearbeiten des zumindest einen Werkstücks (W1, W2),
**dadurch gekennzeichnet, dass** in vertikaler Richtung unterhalb der ersten und/oder zweiten Werkstückhalteeinrichtung (101, 201), eine erste Absaugeinrichtung (20) vorgesehen ist.

12. Verfahren gemäß Anspruch 11, **dadurch gekennzeichnet, dass**
mit der ersten Werkstückhalteeinrichtung (101) ein erstes Werkstück (W1) gehalten wird und mit der zweiten Werkstückhalteeinrichtung (201) ein zweites Werkstück (W2) gehalten wird, wobei bevorzugt ist, dass das erste Werkstück (W1) und das zweite Werkstück (W2) zumindest teilweise gleichzeitig bearbeitet werden.

13. Verfahren gemäß Anspruch 11, wobei das erste Werkstück (W1) nach dem Bearbeiten einer ersten Längsseite an der ersten Werkstückhalteeinrichtung (101) umgespannt wird, um eine zweite Längsseite des ersten Werkstücks (W1) zu bearbeiten, und/oder das zweite Werkstück (W2) nach dem Bearbeiten einer ersten Längsseite an der zweiten Werkstückhalteeinrichtung (201) umgespannt wird, um eine zweite Längsseite des zweiten Werkstücks zu bearbeiten.

14. Verfahren gemäß einem der Ansprüche 11-13, wobei das Trennelement (10) entlang einer, insbesondere in horizontaler Richtung ausgerichteten, linearen Führung (13) bewegt wird.

15. Verfahren gemäß einem der Ansprüche 11-14, wobei das Trennelement (10) zum Trennen des ersten Bearbeitungsbereichs (1) vom zweiten Bearbeitungsbereich (2) zwischen diese hinein bewegt, insbesondere geschwenkt, wird.

## Claims

1. Machine tool for machining workpieces (W1, W2), comprising:
a first workpiece holder (101) for holding a first workpiece (W1) and a second workpiece holder (201) for holding a second workpiece (W2),
a separating element (10), wherein a first machining region (1) can be separated at least in part from a second machining region (2) by means of the separating element (10),
wherein one of the workpiece holders (101, 201) is arranged or can be arranged in each machining region (1, 2),
**characterised in that**
the separating element (10) is movable in order to change the dimensions of the first and second machining region (1, 2),
wherein a first suction device (20) is provided vertically below the first and/or second workpiece holder (101, 201).

2. Machine tool according to claim 1, **characterised in that** the separating element (10) is attached to a displaceable unit (11) or is designed to be integral therewith, which displaceable unit (11) comprises a drive (12), in particular a servomotor, for moving the displaceable unit (11), wherein it is preferred that
the separating element (10) is movable, in particular pivotable, relative to the displaceable unit (11).

3. Machine tool according to any of the preceding claims, **characterised in that** the separating element (10) is movable along a linear guide (13) that is in particular oriented in a horizontal direction.

4. Machine tool according to any of the preceding claims, **characterised in that** the separating element (10) is planar and preferably has a contour, in particular grooves, inclined surfaces and/or curved surfaces, for guiding away chips, in particular in an at least partially vertically downwardly oriented direction.

5. Machine tool according to any of the preceding claims, wherein the first suction device comprises a hopper (22) for receiving chips.

6. Machine tool according to any of the preceding claims, **characterised in that** the machine tool comprises at least one lateral suction device (40, 30).

7. Machine tool according to any of the preceding claims, **characterised by** a control device which is configured to move the separating element (10) before, during or after a workpiece (W1, W2) is clamped by the first workpiece holder (101) and/or the second workpiece holder (W2).

8. Machine tool according to any of the preceding claims, **characterised by** a first machining unit (102) and a second machining unit (202) which are designed for machining, in particular material removal, wherein it is preferred that the first machining unit (102) can be arranged in the first machining region (1) and the second machining unit (202) can be arranged in the second machining region (2).

9. Machine tool according to any of the preceding claims, **characterised in that** the first workpiece holder (101) is supported by a first displaceable support (103) which is movable along a first guide device (51), in particular a rail, and/or the second workpiece holder (201) is supported by a second displaceable support (203) which is movable along a second guide device (52), in particular a rail, wherein
it is preferred that the first and/or second guide device extends transversely, in particular perpendicularly, to the guide (13) of the separating element (10).

10. Machine tool according to any of the preceding claims, **characterised in that** the first and/or second workpiece holder (101, 201) is designed such that a workpiece can be clamped on two sides of the workpiece holder.

11. Method for workpiece machining, preferably using an apparatus according to any of the preceding claims, comprising:
holding at least one workpiece (W1, W2) by means of a first workpiece holder (101) or a second workpiece holder (201),
wherein a first machining region (1) is separated at least in part from a second machining region (2) by means of a separating element (10) and the at least one workpiece (W1, W2) has been or is arranged in the first or second machining region (1, 2),
moving the separating element (10) before, during or after the at least one workpiece (W1, W2) is held in order to change the dimensions of the first and second machining region (1, 2),
machining the at least one workpiece (W1, W2),
**characterised in that** a first suction device (20) is provided vertically below the first and/or second workpiece holder (101, 201).

12. Method according to claim 11, **characterised in that**
a first workpiece (W1) is held by means of the first workpiece holder (101) and a second workpiece (W2) is held by means of the second workpiece holder (201), wherein it is preferred that the first workpiece (W1) and the second workpiece (W2) are machined at least partially at the same time.

13. Method according to claim 11, wherein the first workpiece (W1) is reclamped on the first workpiece holder (101) after a first long side has been machined in order to machine a second long side of the first workpiece (W1), and/or the second workpiece (W2) is reclamped on the second workpiece holder (201) after a first long side has been machined in order to machine a second long side of the second workpiece.

14. Method according to any of claims 11-13, wherein the separating element (10) is moved along a linear guide (13) that is in particular oriented in a horizontal direction.

15. Method according to any of claims 11-14, wherein the separating element (10) is moved, in particular pivoted, in between the first machining region (1) and second machining region (2) in order to separate them.

## Revendications

1. Machine d'usinage pour l'usinage de pièces (W1, W2), présentant :
un premier dispositif de maintien de pièce (101) pour maintenir une première pièce (W1) et un second dispositif de maintien de pièce (201) pour maintenir une seconde pièce (W2),
un élément de séparation (10), dans laquelle l'élément de séparation (10) permet de séparer au moins partiellement une première zone d'usinage (1) d'une seconde zone d'usinage (2),
dans laquelle l'un des dispositifs de maintien de pièce (101, 201) est agencé ou peut être agencé dans chaque zone d'usinage (1, 2),
**caractérisée en ce que**
l'élément de séparation (10) est mobile pour modifier les dimensions des première et seconde zones d'usinage (1, 2),
dans laquelle un premier dispositif d'aspiration (20) est prévu dans le sens vertical en dessous du premier et/ou du second dispositif de maintien de pièce (101, 201).

2. Machine d'usinage selon la revendication 1, **caractérisée en ce que** l'élément de séparation (10) est monté sur une unité mobile (11) ou est formé d'un seul tenant avec celle-ci, laquelle unité mobile (11) présente un entraînement (12), en particulier un servomoteur, pour déplacer l'unité mobile (11), dans laquelle de préférence,
**en ce que** l'élément de séparation (10) est mobile, en particulier pivotant, par rapport à l'unité mobile (11).

3. Machine d'usinage selon l'une quelconque des revendications précédentes, **caractérisée en ce que** l'élément de séparation (10) est mobile le long d'un guide linéaire (13), notamment orienté dans la direction horizontale.

4. Machine d'usinage selon l'une quelconque des revendications précédentes, **caractérisée en ce que** l'élément de séparation (10) est en forme de plaque et présente de préférence un contour, en particulier des rainures, des surfaces inclinées et/ou des surfaces incurvées, pour l'évacuation des copeaux, en particulier dans une direction orientée au moins partiellement verticalement vers le bas.

5. Machine d'usinage selon l'une quelconque des revendications précédentes, dans laquelle le premier dispositif d'aspiration comprend une trémie (22) destinée à recevoir des copeaux.

6. Machine d'usinage selon l'une quelconque des revendications précédentes, **caractérisée en ce que** la machine d'usinage présente au moins un dispositif d'aspiration latéral (40, 30).

7. Machine d'usinage selon l'une quelconque des revendications précédentes, **caractérisée par** un dispositif de commande agencé pour déplacer l'élément de séparation (10) avant, pendant ou après un serrage d'une pièce (W1, W2) avec le premier dispositif de maintien de pièce (101) et/ou le second dispositif de maintien de pièce (W2).

8. Machine d'usinage selon l'une quelconque des revendications précédentes, **caractérisée par** un premier agrégat d'usinage (102) et un second agrégat d'usinage (202) qui sont agencés pour l'usinage, en particulier par enlèvement de copeaux, dans laquelle il est préférable que le premier agrégat d'usinage (102) puisse être agencé dans la première zone d'usinage (1) et le second agrégat d'usinage (202) dans la seconde zone d'usinage (2).

9. Machine d'usinage selon l'une quelconque des revendications précédentes, **caractérisée en ce que** le premier dispositif de maintien de pièce (101) est supporté par un premier support mobile (103) qui est mobile le long d'une première direction de guidage (51), en particulier un rail, et/ou le second dispositif de maintien de pièce (201) est supporté par un second support mobile (203) qui est mobile le long d'une seconde direction de guidage (52), en particulier un rail, dans laquelle
de préférence, le premier et/ou le second dispositif de guidage s'étend transversalement, en particulier perpendiculairement, au guidage (13) de l'élément de séparation (10).

10. Machine d'usinage selon l'une quelconque des revendications précédentes, **caractérisée en ce que** le premier et/ou le second dispositif de maintien de pièce (101, 201) sont conçus de sorte qu'une pièce peut être serrée sur deux côtés du dispositif de maintien de pièce.

11. Procédé d'usinage de pièces, de préférence en utilisant un dispositif selon l'une quelconque des revendications précédentes, comprenant :
le maintien d'au moins une pièce (W1, W2) avec un premier dispositif de maintien de pièce (101) ou un second dispositif de maintien de pièce (201),
dans lequel une première zone d'usinage (1) est séparée au moins partiellement d'une seconde zone d'usinage (2) par un élément de séparation (10) et la au moins une pièce (W1, W2) est ou sera agencée dans la première ou la seconde zone d'usinage (1, 2),
le déplacement de l'élément de séparation (10) avant, pendant ou après le maintien de la au moins une pièce (W1, W2) afin de modifier les dimensions des première et seconde zones d'usinage (1, 2),
l'usinage de la au moins une pièce (W1, W2),
**caractérisé en ce qu'**un premier dispositif d'aspiration (20) est prévu dans le sens vertical en dessous du premier et/ou du second dispositif de maintien de pièce (101, 201).

12. Procédé selon la revendication 11, **caractérisé en ce que**
une première pièce (W1) est maintenue avec le premier dispositif de maintien de pièce (101) et une seconde pièce (W2) est maintenue avec le second dispositif de maintien de pièce (201), dans lequel de préférence la première pièce (W1) et la seconde pièce (W2) sont usinées au moins partiellement simultanément.

13. Procédé selon la revendication 11, dans lequel la première pièce (W1), après avoir été usinée sur un premier côté longitudinal, est réajustée au niveau du premier dispositif de maintien de pièce (101) pour usiner un second côté longitudinal de la première pièce (W1), et/ou la seconde pièce (W2), après avoir été usinée sur un premier côté longitudinal, est réajustée au niveau du second dispositif de maintien de pièce (201) pour usiner un second côté longitudinal de la seconde pièce.

14. Procédé selon l'une quelconque des revendications 11-13, dans lequel l'élément de séparation (10) est déplacé le long d'un guide linéaire (13), en particulier orienté selon une direction horizontale.

15. Procédé selon l'une quelconque des revendications 11-14, dans lequel l'élément de séparation (10) est déplacé, en particulier pivoté, entre la première zone d'usinage (1) et la seconde zone d'usinage (2) pour les séparer.
